# EUROPEAN PATENT APPLICATION

(11) **EP 1 180 385 A2**
(43) Date of publication of application: **20.02.2002**
(21) Application number: 01660147.8
(22) Date of filing: 15.08.2001
(51) Int. Cl.: A63F 13/12

(54) **A computer aided board game system played by means of a wireless remote terminal**

(30) Priority: 15.08.2000 FI 20001795
(71) Applicant: Springtoys OY, 00130 Helsinki (FI)
(72) Inventor: Finér, Jani, 00180 Helsinki (FI); Sinivaara, Jyrki, 45700 Kuusankoski (FI)
(74) Representative: LEITZINGER OY

(57) **Abstract**

A computer aided board game played by means of a wireless remote terminal, the game board (2) of which is formed by a publication surface and a representation of the game on the said surface. The publication surface is attached to, or the representation of the game is printed on, products, accessories, publications and/or advertising material distributed or sold to the public. The game server (6), which is equipped with game simulation software, is arranged to receive player-specific control messages via control messages sent to a wireless network (4) by means of a wireless remote terminal (3), and to send the player-specific simulation results to at least the wireless remote terminal (3) of the sender of the control messages.

## Description

The invention relates to a computer aided board game system played by means of a wireless remote terminal, the game board of which is formed by a publication surface and a complete or partial representation of the game on the said surface.

In traditional board games, it is not possible to carry out demanding calculations, such as, for example in a game of golf, the flight path of the ball flying through the air, which is determined by several influencing factors (choice of club, strength of drive, direction of drive, force of wind, and other such factors). Traditional board games are also limited by both the number of participants and the location, because all players must be in the same room.

The use of SMS text messages in mobile entertainment has earlier been limited to characters shown on the display of a telephone. SMS is an electric communication channel which transmits text only. Therefore, it has been possible to play only very simple applications - which were, however, difficult to understand - in which the use of the text message properties of the telephone has been limited.

The aim of the invention is to provide an unexpected combination of a game played by means of a wireless remote terminal and a computer aided board game, due to which the game will be interactive and can be controlled in a versatile manner by means of control messages.

This aim is achieved by means of the invention on the basis of the characteristics disclosed in the appended claim 1. Preferred embodiments of the invention are described in the dependent claims.

The idea behind the invention has thus been to combine a traditional board game and the new control message properties of wireless remote terminals (such as the new text message properties of mobile phones), and a server computer's programs into an unexpected combination which makes board games independent of time and place, at the same time as the wireless remote terminal intended for communication becomes increasingly important in game and other entertainment use.

By means of the board game relating to the invention, it is possible for the player to entertain himself and his friends irrespective of time or place, even on various continents, for example, by means of a game of golf printed on a postcard. The players will also be able to play the game simultaneously in different parts of the world.

The invention is illustrated in the following by means of an example, with reference to the accompanying drawings, in which
- Figure 1: shows diagrammatically a board game according to one example of the invention and the means used in it;
- Figure 2: shows in greater detail one example of a game board used in a game relating to the invention, which in this example case is intended for playing golf; and
- Figure 3: shows an example diagram of the operational flow chart of a game server.

The game board 2 is formed by a publication surface and a complete or partial representation of the game printed on the said surface. The game board 2 is attached to, or the complete or partial representation of the game is printed directly on, products, accessories, publications and/or advertising material distributed or sold to the public. The game board is, therefore, printed or can be printed on paper, fabric, the TV screen or a similar base by means of which the game board can be distributed to a relatively large public.

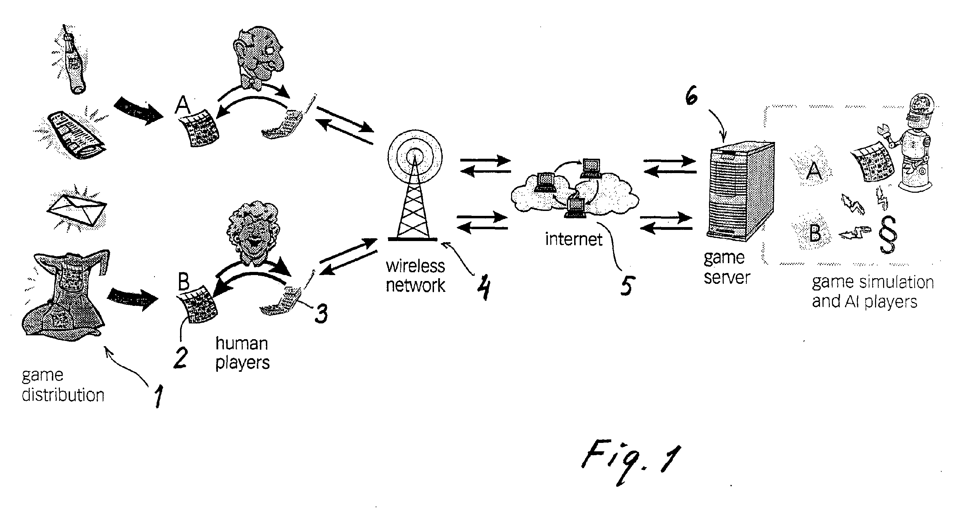

Reference numeral 1 in Figure 1 denotes examples of products or means suitable for distributing the game board 2. The board game relating to the invention is played by means of a wireless remote terminal 3, such as a GSM or WAP phone or a PDA or Pager device, by sending and receiving control messages, for example, text messages via a wireless network 4. The wireless network 4 is in data communication with the game server 6 via the internet 5, the game server being equipped with game simulation software. The game server 6 is arranged to receive player-specific control messages via the control messages coming from the wireless network 4, such as SMS or Pager messages. The game server 6 is in addition arranged to send player-specific simulation results to at least the wireless remote terminal of the sender of the control messages.

The game server 6 is equipped with the simulation software of several different games, the selection instructions corresponding to each of which are included in the representation of the game in question, which is given on the game board 2.

The game server 6 is programmed to give the user's wireless remote terminal a password as a control message, by means of which one or more co-players can join in playing the same game. Once the game has ended, the game server is programmed to announce the final results of the games of all players who participated in the same game to all players who participated in the same game.

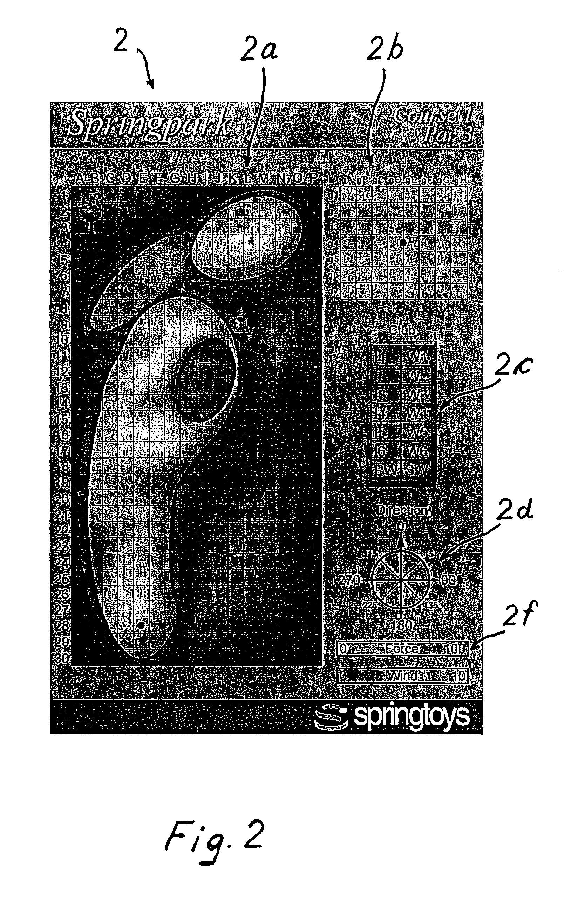

In the example game shown in Figure 2, on the game board 2 is printed a golf course 2a which is divided into squares, the locations of which can be given as letter/number combinations. Course 2b is a partial enlargement of the green around the hole. On the basis of table 2c can be selected different clubs, and on the basis of the direction chart 2d the direction of the drive, and on the basis of the force scale 2f, the force of the drive.

A example game is described in the following, based on the board game relating to Figure 1 and the game board according to Figure 2.

### Example game

### Terminology:

### User - Primary user of the remote board game; uses the name Pete the Player when playing.

### Fellow player - A player whom the User challenges into a game of golf.

1. The User receives an advertising postcard with free distribution newspapers, on which card is printed a board game resembling a golf course. On the reverse side of the card are clear instructions, by following which the User starts to play golf, for example, by means of a GSM mobile phone or other wireless remote terminal.
2. The User sends the text message "GOLF 2 COURSE1" to the game server telephone number given, in which message the word "GOLF" indicates which game the User wishes to play, "2" indicates the number of players, and "COURSE1" the course to be played.
3. After a while, the server answers by sending the message "Welcome to play golf. Your password for the game is xxx123. Please send this password and your name to the server" to the User's wireless remote terminal.
4. Now the User knows the password (xxx123) by means of which the server will be able to distinguish this particular game from other games being played simultaneously. The user now needs to notify his friend (Fellow player) with whom he wants to play golf of this password. If the Fellow player is further away, the user may send him a text message: "Will you play golf? The password is xxx123", presuming that the Fellow player has a wireless remote terminal and a similar game board on which he can follow the proceeding of the game for his part and check the rules if necessary.
5. The User then sends the game server the message "PetethePlayer xxx123". On the basis of this message, the game server will know that the name of the first player in the game xxx123 is Pete the Player.
6. The game server will then wait for another player to join in game xxx123. Once the Fellow player has registered with the game server in the same way as the User under point 5, the game server will send both users the message *"Game ready. PetethePlayer's* ball is at coordinate E28. The base is* a *tee in medium-length grass. The wind is blowing 2m/s in direction 45. This is your first drive."* (*The Fellow player's message naturally has the name he has given. From here onwards, the Fellow player can play the game at his own pace just as the User. For the sake of clarity, only the User's turns will be gone through here).
7. The User looks up coordinate E28 on his game board. Taking into account the location, base and wind, he considers that he will make the best drive as follows:
the User reasons that the best drive can be achieved with club W1 (wood 1), in direction 38, at a force of 100. The clubs, direction finder and force values can be found on the game board. The actual drive will, therefore, take place by sending the game server the following text message: *"W1* 38 *100".*
8. The values W1, 38 and 100 arrive at the game server, which further adds to them the effects of the wind (2m/s, in direction 45) and the base (tee in medium-length grass), and calculates the path for the imaginary golf ball. As a result of the calculation, the server gives 19 as the new location of the ball.
9. The game server sends the User the text message *"PetethePlayer, drive 2. The ball is at coordinate 19. The base is rough, short grass. The wind is blowing 4m/s in direction 35."*
10. Now the User hits again, following the same principle as under point 7, adjusting naturally to the new location as concerns the choice of club, direction and force. When the User gets the ball into the coordinate system area marked in red, that is, in the vicinity of the hole, the coordinate system changes into a more detailed mode, which is shown as a putting green on the right side of the game board.
11. Once the User and the Fellow player have both played the ball acceptably into the hole (at coordinate gDgE and g4), the game server calculates the drives of both players and compiles a table of them, showing which of the players was the winner this time. The game server sends this table to both players as the following text message:"Game *xxx123, Springpark, Course1, Par3. Winner: PetethePlayer 3 drives Loser: Fellow player, 5 drives. You can play the same game again by using the same password (xxx123)."*

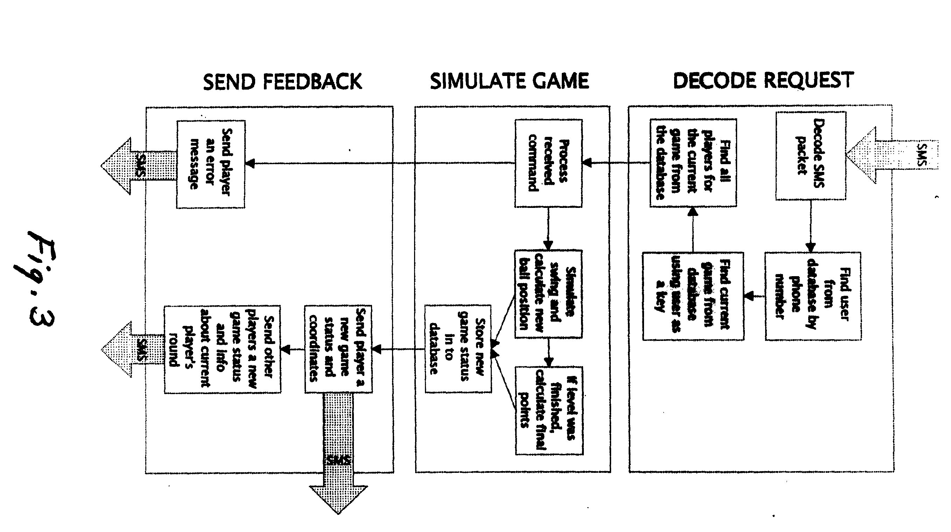

Figure 3 shows the operational flow chart of the game server. The arriving SMS message is decoded and the user is identified on the basis of the identification code, for example, by searching from a database on the basis of a telephone number. In this way, new playing instructions can be given during the game without having to enter the code again. After this, the program finds the current game played by user in question from the database and all other players playing the same game. The simulation software then carries out the calculations based on one or more control messages and stores the new game status in the database. The new game status is sent as a text message to the player's mobile phone, in addition to which the new game status is sent for the information of the other players playing the same game. If the control messages coming to the game server are erroneous or inadequate, the user is sent an error message so that he can send the control messages again.

## Claims

1. A computer aided board game system played by means of a wireless remote terminal, the game board (2) of which is formed by a publication surface and a complete or partial representation of the game on the said surface, **characterised in that** the publication surface is attached to, or the complete or partial representation of the game is printed on, products, accessories, publications and/or advertising material distributed or sold to the public, and that the game server (6), which is equipped with game simulation software, is arranged to receive player-specific control messages via the control messages sent to a wireless network (4) by means of a wireless remote terminal (3), and to send the player-specific simulation results to at least the wireless remote terminal (3) of the sender of the control messages.

2. A board game system as claimed in claim 1, **characterised in that** the game server (6) is programmed to identify the users on the basis of an identification code.

3. A board game system as claimed in claim 1 or 2, **characterised in that** the game server (6) is equipped with the simulation software of one or more different games.
